# FASCICULE DE BREVET EUROPEEN

(11) **EP 0 856 492 B1**
(45) Date de publication et mention de la délivrance du brevet: **10.05.2000**
(21) Numéro de dépôt: 98400183.4
(22) Date de dépôt: 29.01.1998
(51) Int. Cl.: C03B 5/00, C03B 1/00, C03B 3/02, B09B 3/00, C10B 49/10, F23G 5/027, F23G 5/033, F23G 5/16, F23G 5/30, F23G 7/00

(54) **Installation de valorisation énergétique de déchets urbains et assimilés**
Anlage zur Verwertung von Hausmüll und ähnlichem
Plant for upgrading urban waste and the like

(30) Priorité: 30.01.1997 FR 9700994
(43) Date de publication de la demande: 05.08.1998
(73) Titulaire: ALSTOM Energy Systems S.A., 78140 Velizy-Villacoublay (FR)
(72) Inventeur: Morin, Jean-Xavier, 45170 Neuville Aux Bois (FR); Peyrelongue, Jean-Pierre, 78600 Pontchartrain (FR)
(74) Mandataire: Gosse, Michel

(56) Documents cités:
- WO-A-96/20130
- FR-A- 2 716 524
- FR-A- 2 735 041
- US-A- 4 977 837
- DRESCHER H: "GLASVERMAHLUNG NEUE WEGE BEIMALTGLASRECYCLING" SPRECHSAAL, vol. 128, no. 2, 1 mars 1995, pages 10-15, XP000551217
- SCHEFFLER J ET AL: "ERZEUGUNG VERWERTBARER PRODUKTE DURCH AUFBEREITUNG UND VERGLASUNG VON ROSTASCHEN AUS DER MULLVERBRENNUNG" ENTSORGUNGS PRAXIS, vol. 13, no. 12, 1 décembre 1995, pages 26-30, XP000539280

## Description

La présente invention concerne une installation de valorisation énergétique de déchets urbains et assimilés.

Elle concerne plus précisément une installation de valorisation énergétique de déchets urbains et assimilés comportant
- un dispositif de broyage des déchets dont les refus sont triés en un premier flux de matières inertes peu polluées en matières organiques et en un second flux de matières inertes pollués en matières organiques ou d'éléments lourds combustibles, ce second flux étant évacué par une première sortie,
- un réacteur à lit fluidisé circulant recevant les déchets broyés,
- un cyclone de séparation des solides dans lequel sont amenés les gaz en sortie du réacteur,
- une chaudière de récupération dans laquelle s'évacuent les gaz en sortie du cyclone et équipée d'un premier ensemble d'échangeurs de chaleur, cette chaudière comportant une trémie de dépoussiérage dont sont évacuées des particules solides par une deuxième sortie,
- un second ensemble d'échangeurs de chaleur disposés dans une chambre où sont amenés les gaz,
- un dispositif de traitement final des gaz dont sont évacués des matières solides résultant du traitement par au moins une troisième sortie.

Une telle installation est décrite dans le document de brevet FR- 2 735 041.

Il est par ailleurs connu de vitrifier les cendres volantes d'installations de traitement de déchets urbains, afin d'obtenir une fusion des matières minérales et une combustion des matières carbonées.

Il est connu d'installer un tel four de fusion et de vitrification sur la ligne principale de l'installation. Une telle vitrification est divulguée dans le document de brevet DE-43 33 510.

Dans de telles installations, une chambre de postcombustion des gaz provenant du système de pyrolyse ou de gazéification (four tournant ou réacteur à lit fluidisé) est prévue en aval du réacteur et les cendres fondues en sortant sont vitrifiées dans un bain de trempe.

De tels systèmes de vitrification nécessitent un apport d'énergie externe important en gaz naturel, oxygène ou électricité compte-tenu de la grande quantité de matériaux solides traités par vitrification. En effet, le pouvoir calorifique des matières solides en sortie du réacteur est insuffisant pour assurer la température de fusion d'une masse de matières inertes importante.

En conséquence, le rendement net de production d'énergie d'une telle installation est réduit considérablement et les coûts d'investissement et de fonctionnement par contre très importants.

L'invention résout ces problèmes de rendement d'une telle installation de valorisation de déchets et pour ce faire, selon l'invention, l'installation est équipée d'un four de fusion et de vitrification indépendant relié à chacune desdites sorties par des conduites à passage commandé.

Cet agencement permet de ne fondre et de ne vitrifier que ce qui est nécessaire à l'amélioration de l'économie globale de la gestion des résidus solides et à son optimisation au cas par cas en fonction des conditions spécifiques ou locales des filières de collecte. Elle permet aussi de consommer pour ce faire un minimum de l'énergie calorifique des déchets pour préserver un haut rendement énergétique.

Il est possible d'utiliser des dispositifs de fusion et de vitrification divers, spécifiquement adaptés à la qualité des déchets à traiter. Il est ainsi envisageable de traiter des gammes de produits allant jusqu'à des déchets ou des combustibles ayant des caractéristiques thermiques éloignées des ordures ménagères traditionnelles ou difficilement traitables en lit fluidisé, par exemple pour des raisons de densité ou de risque d'agglomération à basse température.

Cet agencement présente également l'avantage d'éviter l'indisponibilité de l'installation en cas de problème du four de fusion et de vitrification. En effet, ce dernier ne se trouvant plus sur la ligne principale de l'installation, son fonctionnement peut être interrompu sans interruption de la ligne principale.

Selon un mode de réalisation préféré, un dispositif de dépoussiérage est disposé entre la chaudière de récupération et le second ensemble d'échangeurs, dont des particules solides sont évacuées par une sortie reliée au four de fusion et de vitrification par une conduite à passage commandé.

Classiquement, un dispositif de filtration des cendres volantes est disposé en aval des échangeurs de chaleur et donc dépoussière les gaz à basse température. Or à basse température, les dioxines se reforment et les métaux lourds les plus polluants se recondensent. Il en résulte des cendres volantes décantées polluées.

Selon cette caractéristique de l'invention, un dispositif de dépoussiérage, de préférence un cyclone, est disposé entre la chaudière de récupération et le second ensemble d'échangeurs. Il en résulte une production de cendres volantes extraites à haute température et donc peu polluées en métaux lourds et dioxines.

De préférence, le dispositif de traitement final comporte un filtre dont les particules solides sont évacuées par une sortie reliée au four de fusion et de vitrification par une conduite à passage commandé.

De plus avantageusement, le dispositif de traitement final comporte un agencement de lavage des fumées dont un gâteau de lavage est évacué par une sortie reliée au four de fusion et de vitrification par une conduite à passage commandé.

Afin d'assurer une granulométrie correcte des refus desiné à être vitrifier, un broyeur cribleur est installé entre la première sortie et le four de fusion et de vitrification.

Avantageusement, le réacteur est équipé d'un lit dense interne pourvu d'une chambre de prélèvement du gaz de pyrolyse qui est injecté dans le four de fusion et de vitrification.

Avantageusement, le four de fusion et de vitrification est pourvu d'un bain de trempe et le dispositif de lavage est équipé d'un dispositif de traitement des effluents liquides dont les rejets sont injectés dans le bain de trempe du four de fusion et de vitrification.

Selon un mode de réalisation préféré, le four de fusion et de vitrification comporte une sole en forme de cuvette et une paroi formant un barrage d'affinage associé à un orifice d'évacuation ou d'écrémage de la couche de surface de la masse de matière fondue.

De préférence, la matière fondue est refroidie tout d'abord sur un tambour refroidi intérieurement par de l'eau puis dans un bain de trempe.

Avantageusement, le four de fusion et de vitrification est pourvu d'un bain de trempe dans lequel sont refroidis les gaz de combustion produits par le four.

L'invention est décrite ci-après plus en détail à l'aide de figures ne représentant qu'un mode de réalisation préféré de l'invention.

La figure 1 est une vue d'ensemble d'une installation de valorisation de déchets urbains conforme à l'invention.

La figure 2 est une vue en coupe d'un mode de réalisation d'un four de fusion et de vitrification.

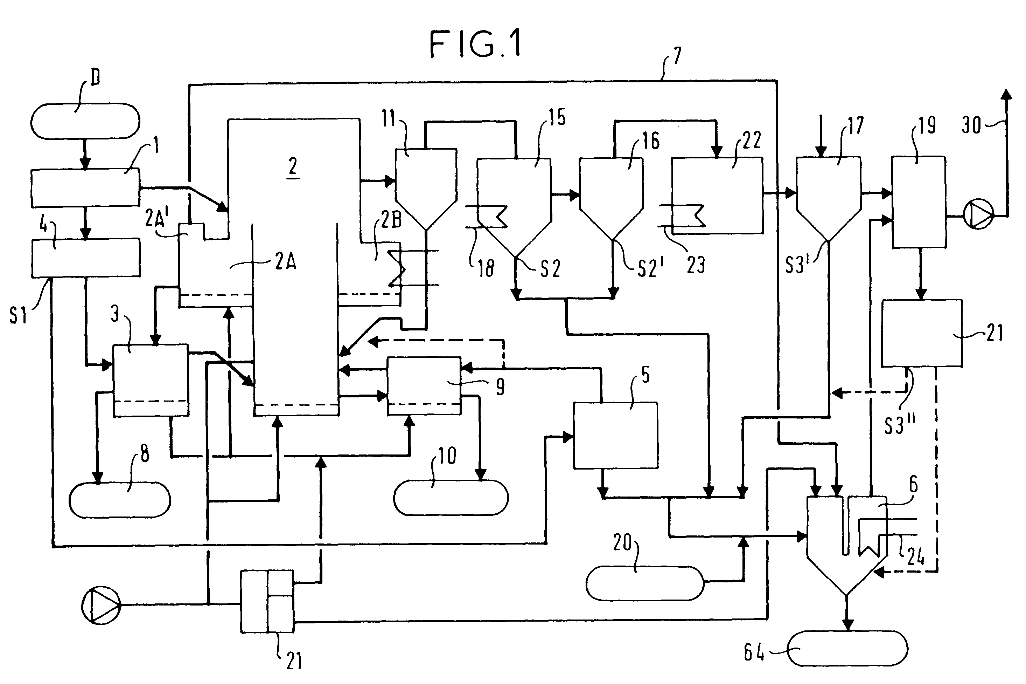

Comme représentée sur la figure 1, l'installation de valorisation énergétique de déchets urbains et assimilés comporte un réacteur à lit fluidisé circulant 2 recevant les déchets broyés. De préférence, ce réacteur est du type de celui décrit dans le document de brevet FR- 2 735 041. Il comporte donc un premier lit fluidisé dense latéral 2A situé sur la paroi du réacteur comportant la conduite d'alimentation en déchets broyés et où se produit une gazéification des déchets broyés et un second lit fluidisé dense latéral 2B équipé d'un surchauffeur. Un conduit d'extraction des éléments lourds non fluidisables est situé à la base du premier lit fluidisé dense latéral 2A et amène ceux-ci dans un dispositif trieur de grosses particules 3 refroidissant ces éléments et extrayant les matières inertes non fluidisables, les autres matières étant réintroduites dans le réacteur 2.

En amont de ce réacteur 2, les déchets bruts sont introduits dans un dispositif de préparation 1 assurant d'une part le broyage des déchets au moyen par exemple d'un agencement de cisaillage comportant une ou deux cisailles rotatives et d'autre part l'évacuation des matières inertes et des matières susceptibles de créer des risques d'agglomération (ferreux, non ferreux, cailloux, verres) au moyen par exemple de séparateurs magnétique et à induction et/ou de tambours selon le gisement de déchets à traiter.

Les déchets broyés sont introduits dans le réacteur 2 et les refus sont triés en deux flux dans un dispositif de tri 4 constitué de préférence de classifieurs gravimétriques ou aérauliques.

Un premier flux de matières inertes peu pollués en matières organiques (verres, cailloux, ferrailles massives) est introduit dans le dispositif trieur de grosses particules 3, où mélangés aux matières chaudes provenant du réacteur 2 et assurant la fonction de refroidissement des matières inertes non fluidisables provenant du réacteur 2, ils subissent un traitement thermique à une température de l'ordre de 400 à 500°C que l'on peut qualifier de nettoyage thermique et qui élimine les matières organiques.

L'on obtient donc sous le dispositif trieur de grosses particules 3 un flux de résidus solides 8 composé de matières inertes et/ou de grande dimension (pierres, verres, céramiques, ferrailles) peu oxydées et débarrassées de matières organiques et peu oxydés, ce qui facilite leur recyclage.

Un second flux de matières inertes pollués en matières organiques ou d'éléments lourds combustibles, dont le taux de carbone est supérieur à 5 % et donc ne pouvant être recyclé directement, est évacué par une première sortie S1 d'où ils sont introduits dans un broyeur cribleur 5 installé sur une conduite à passage commandé vers un four de fusion et de vitrification 6.

Le premier lit dense interne 2A est équipé d'une chambre de prélèvement du gaz de pyrolyse 2A' qui est injecté dans le four de fusion et de vitrification 6 par une conduite 7 séparée du flux principal des gaz de combustion.

Le réacteur 2 est également équipé d'un dispositif trieur de fines particules 9 permettant la séparation des cendres en partie basse du réacteur 2 et la recirculation dans celui-ci de particules solides dont la granulométrie est compatible avec la fluidisation. Ce dispositif 9 est également utilisé pour la réinjection des fines particules provenant du broyeur cribleur 5. Ces fines particules contiennent encore une partie organique utilisable pour la combustion des matières inertes fluidisables et leur teneur en inertes réduit la consommation de sable servant de constituant de base dans le réacteur 2. Le passage de ces refus fins dans le dispositif trieur de fines particules assure également leur nettoyage thermique des éléments non fluidisables. Du dispositif trieur de fines particules 9 sont évacués des mâchefers 10 valorisables.

La qualité des refus est donc améliorée grâce à leur passage dans les dispositifs trieurs de grosses particules 3 et de fines particules 9 associés au réacteur 2. Il est ainsi évité de devoir les stocker en décharge de classe 2.

En aval du réacteur 2, les fumées circulent dans:
- un cyclone 5 de séparation des solides,
- une chaudière de récupération 15 dans laquelle s'évacuent les gaz en sortie du cyclone 11 et équipée d'un premier ensemble d'échangeurs de chaleur 18, plus précisément d'un évaporateur, cette chaudière comportant une trémie de dépoussiérage 15A dont sont évacués des particules solides par une deuxième sortie S2,
- un second cyclone 16 assurant le dépoussiérage à chaud des fumées dont des particules solides sont évacuées par une sortie S2',
- un second ensemble d'échangeurs de chaleur 23, plus précisément un économiseur, disposés dans une chambre 22 où sont amenés les gaz,
- un dispositif de traitement final des gaz dont sont évacués des matières solides résultant du traitement par au moins une troisième sortie S3' et S3".

Plus précisément, le dispositif de traitement final comporte un filtre 17, de préférence un filtre à manches, équipé d'une injection de charbon actif et dont les particules solides sont évacuées par une sortie S3' et un agencement de lavage 19 des fumées dont un gâteau de lavage est évacué par une sortie S3", les fumées épurées étant évacuées par une cheminée 30.

Le dispositif de lavage 19 est équipé d'un dispositif de traitement 21 des effluents liquides.

Toutes les sorties ci-dessus décrites S1 à S3" sont reliées par des conduites à passage commandé au four de fusion et de vitrification 6 indépendant de la ligne principale déjà décrite de l'installation.

Dans ce dispositif 6, l'énergie de fusion est apportée par le gaz de pyrolyse capté dans le lit de fluidisation 2A et éventuellement par un apport de déchets plastiques 20 pouvant être issus de filières de recyclage d'emballages dont les refus (emballages souillés) contiennent une énergie thermique considérable. Le comburant du four de fusion 6 est de l'air ou de l'air enrichi en oxygène selon la température voulue. Dans le deuxième cas, l'air enrichi est fourni par une unité membranaire 21 et la fraction appauvrie en oxygène est alors utilisée pour la fluidisation des dispositifs trieurs 3, 9 et du réacteur à lit fluidisé 2.

La granulométrie des cendres volantes provenant de la sortie S2 de la chaudière de récupération 15, de la sortie S2' du cyclone 16, de la sortie S3' du filtre 17 et celle du gâteau provenant de la sortie S3" du dispositif de lavage 19 permettent l'injection directe de ces matières dans le four de fusion et de vitrification 6. Par contre, les refus du dispositif de tri 4 assurant la préparation des déchets sont de granulométrie très diverse et éventuellement élevée. D'où la nécessité du broyeur cribleur 5 entre la sortie S1 et le four de fusion et de vitrification 6.

Le four de fusion et de vitrification 6 peut être conçu de façon différente selon les quantités de matières à traiter et le degré de fusion recherché.

Il peut être du type de celui décrit dans le document de brevet FR-2 716 524 qui permet une fusion contrôlée séparée des deux fractions à vitrifier: la fraction grossière issue des refus en règle générale peu concentrée en métaux lourds et la fraction pulvérulente issue des extractions de cendres volantes plus polluée.

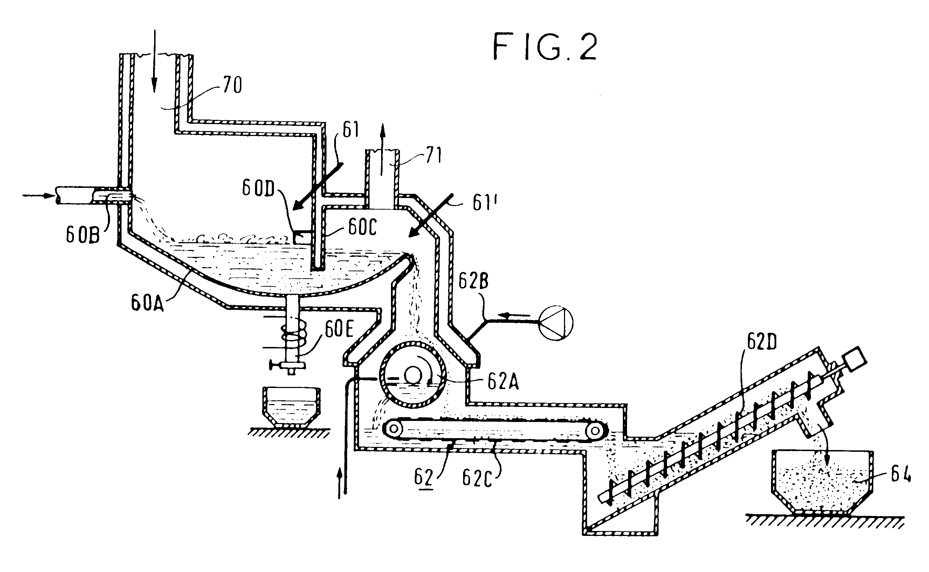

La figure 2 représente un autre mode de réalisation du four de fusion et de vitrification.

La sole 60A du four est en forme de cuvette dans laquelle s'écoulent les cendres volantes et équivalentes introduites par l'orifice 60B. Le gaz de pyrolyse est introduit par le conduit 70 et compte-tenu de sa température, les cendres sont fondues. Le four est également équipé d'un brûleur 61 alimenté en air ou en air enrichi. Une paroi 60C forme un barrage d'affinage associé à un orifice 60D d'évacuation ou d'écrémage de la couche de surface de la masse de matière fondue. Les sels fondus sont ainsi évacués. Par ailleurs, une purge 60E des métaux tombés en fond de sole est prévu pour améliorer la qualité du bain de fusion.

En aval de la paroi de barrage 60C, le dispositif comporte un éventuel brûleur de secours 61' à oxygène et le bain fondu s'écoule d'un bec de coulée sur un tambour 62A refroidi intérieurement par de l'eau. Ce tambour 62A permet d'éviter une trempe brutale à l'eau dans le bain 62 et une solidification trop rapide nuisible aux caractéristiques mécaniques du vitrifiat. La vitrification est poursuivie dans le bain de trempe 62 sur un convoyeur à plaques refroidies 62C avant l'extraction du vitrifiat 64 par une vis de transport 62D au travers d'un joint d'eau assurant l'étanchéité vers l'extérieur des fumées.

Ce mode de réalisation permet d'améliorer efficacement la qualité du vitrifiat en atteignant un niveau de cristallisation garantissant la stabilité à très long terme.

Les gaz produits dans le four de fusion 6 sont refroidis par une trempe à l'eau par barbotage dans le bain de vitrification. Ce refroidissement brutal évite la reformation des dioxines contenues entre autres dans le mélange de cendres volantes et de charbon actif provenant du filtre 17. Il piège également les cendres secondaires envolées au-dessus du bain de fusion et la majorité des métaux lourds évaporés lors de la fusion, ce qui évite de les renvoyer dans le traitement des fumées principal.

Les fumées sont ensuite évacuées par le conduit 71 et introduites dans le dispositif de lavage 19.

Pour compenser l'évaporation, l'appoint d'eau du bain de trempe du four de fusion et de vitrification 6 est effectué à partir des rejets du traitement des effluents liquides 21 ce qui permet de régler son pH et assure une meilleure insolubilisation des métaux lourds.

Avantageusement, un circuit de refroidissement 24 évacue les calories du bain de vitrification pour les réutiliser au réchauffage de l'eau alimentaire.

## Revendications

1. Installation de valorisation énergétique de déchets urbains et assimilés comportant
- un dispositif de broyage (1) des déchets dont les refus sont triés en un premier flux de matières inertes peu polluées en matières organiques et en un second flux de matières inertes polluées en matières organiques ou d'éléments lourds combustibles, ce second flux étant évacué par une première sortie (S1),
- un réacteur à lit fluidisé circulant (2) recevant les déchets broyés,
- un cyclone (11) de séparation des solides dans lequel sont amenés les gaz en sortie du réacteur (2),
- une chaudière de récupération (15) dans laquelle s'évacuent les gaz en sortie du cyclone (11) et équipée d'un premier ensemble d'échangeurs de chaleur (18), cette chaudière comportant une trémie de dépoussiérage dont sont évacués des particules solides par une deuxième sortie (S2),
- un second ensemble d'échangeurs de chaleur (23) disposés dans une chambre (22) où sont amenés les gaz,
- un dispositif de traitement final des gaz dont sont évacués des matières solides résultant du traitement par au moins une troisième sortie (S3', S3"),
caractérisée en ce qu'elle est équipée d'un four de fusion et de vitrification (6) indépendant relié à chacune desdites sorties par des conduites à passage commandé.

2. Installation selon la revendication 1, caractérisée en ce qu'un dispositif de dépoussiérage (16) est disposé entre la chaudière de récupération (15) et le second ensemble d'échangeurs (23), dont des particules solides sont évacuées par une sortie (S2') reliée au four de fusion et de vitrification par une conduite à passage commandé.

3. Installation selon la revendication 1 ou 2, caractérisée en ce que le dispositif de traitement final comporte un filtre (17) dont les particules solides sont évacuées par une sortie (S3') reliée au four de fusion et de vitrification (6) par une conduite à passage commandé.

4. Installation selon la revendication 1, 2 ou 3, caractérisée en ce que le dispositif de traitement final comporte un agencement de lavage des fumées (19, 21) dont un gâteau de lavage est évacué par une sortie (S3") reliée au four de fusion et de vitrification (6) par une conduite à passage commandé.

5. Installation selon l'une des revendications précédentes, caractérisée en ce qu'un broyeur cribleur (5) est installé entre la première sortie (S1) et le four de fusion et de vitrification (6).

6. Installation selon l'une des revendications précédentes, caractérisée en ce que le réacteur (2) est équipé d'un lit dense interne (2A) pourvue d'une chambre de prélèvement du gaz de pyrolyse qui est injecté dans le four de fusion et de vitrification (6).

7. Installation selon la revendication 3 et 4, caractérisée en ce que le four de fusion et de vitrification (6) est pourvu d'un bain de trempe et l'agencement de lavage est équipé d'un dispositif de traitement (21) des effluents liquides dont les rejets sont injectés dans le bain de trempe du four de fusion et de vitrification (6).

8. Installation selon l'une des revendications précédentes, caractérisée en ce que le four de fusion et de vitrification (6) comporte une sole (60A) en forme de cuvette et une paroi (60C) formant un barrage d'affinage associé à un orifice (60D) d'évacuation ou d'écrémage de la couche de surface de la masse de matière fondue.

9. Installation selon la revendication 8, caractérisée en ce que la matière fondue est refroidie tout d'abord sur un tambour (62A) refroidi intérieurement par de l'eau puis dans un bain de trempe (62).

10. Installation selon l'une des revendications précédentes, caractérisée en ce que le four de fusion et de vitrification (6) est pourvu d'un bain de trempe dans lequel sont refroidis les gaz de combustion produits par le four (6).

## Patentansprüche

1. Anlage zur energetischen Verwertung von Hausmüll und dergleichen, mit
- einer Vorrichtung zum Zerkleinern (1) des Mülls, deren Rückstände in einen ersten Strom von wenig mit organischen Materialien verunreinigten inerten Materialien und einen zweiten Strom von mit organischen Materialien verunreinigten inerten Materialien oder schweren brennbaren Elementen sortiert werden, wobei dieser zweite Strom durch einen ersten Ausgang (S1) abgeführt wird,
- einem Zirkulations-Fließbettreaktor (2), der den zerkleinerten Müll aufnimmt,
- einem Zyklon (11) zum Abscheiden von Feststoffen, in den die Gase am Ausgang des Reaktors (2) geführt werden,
- einem Abwärmekessel (15), in den die Gase am Ausgang des Zyklons (11) abgeführt werden und der mit einer ersten Anordnung von Wärmetauschern (18) ausgestattet ist, wobei dieser Kessel einen Entstaubungsbunker aufweist, von dem feste Teilchen durch einen zweiten Ausgang (S2) abgeführt werden,
- einer zweiten Anordnung von Wärmetauschern, angeordnet in einer Kammer (22), in die die Gase geführt werden,
- einer Vorrichtung zur Endbearbeitung der Gase, aus der aus der Bearbeitung resultierende feste Materialien durch wenigstens einen dritten Ausgang (S3', S3") abgeführt werden,
dadurch gekennzeichnet, dass sie mit einem unabhängigen Schmelz- und Verglasungsofen (6) ausgestattet ist, der mit jedem der Ausgänge über Leitungen mit gesteuertem Durchgang verbunden ist.

2. Anlage nach Anspruch 1, dadurch gekennzeichnet, dass eine Entstaubungsvorrichtung (16) zwischen dem Abwärmekessel (15) und der zweiten Anordnung von Wärmetauschern (23) angeordnet ist, deren feste Teilchen durch einen Ausgang (S2') abgeführt werden, der mit dem Schmelz- und Verglasungsofen über eine Leitung mit gesteuertem Durchgang verbunden ist.

3. Anlage nach Anspruch 1 oder 2, dadurch gekennzeichnet, dass die Endbearbeitungsvorrichtung einen Filter (17) aufweist, dessen feste Teilchen durch einen Ausgang (S3') abgeführt werden, der mit dem Schmelz- und Verglasungsofen (6) über eine Leitung mit gesteuertem Durchgang verbunden ist.

4. Anlage nach Anspruch 1, 2 oder 3, dadurch gekennzeichnet, dass die Endbearbeitungsvorrichtung eine Rauchgaswaschanordnung (19, 21) aufweist, von der ein Waschkuchen durch einen Ausgang (S3") abgeführt wird, der mit dem Schmelz- und Verglasungsofen (6) über eine Leitung mit gesteuertem Durchgang verbunden ist.

5. Anlage nach einem der vorhergehenden Ansprüche, dadurch gekennzeichnet, dass ein Siebzerkleinerer (5) zwischen dem ersten Ausgang (S1) und dem Schmelz- und Verglasungsofen (6) installiert ist.

6. Anlage nach einem der vorhergehenden Ansprüche, dadurch gekennzeichnet, dass der Reaktor (2) mit einem dichten inneren Bett (2A) ausgestattet ist, das mit einer Kammer zur Entnahme von Pyrolysegas versehen ist, das in den Schmelz- und Verglasungsofen (6) eingespeist wird.

7. Anlage nach Anspruch 3 und 4, dadurch gekennzeichnet, dass der Schmelz- und Verglasungsofen (6) mit einem Abschreckbad ausgestattet ist, und dass die Waschanordnung mit einer Bearbeitungsvorrichtung (21) für die abfließenden Flüssigkeiten versehen ist, deren Ausstoß in das Abschreckbad des Schmelz- und Verglasungsofens (6) eingespeist wird.

8. Anlage nach einem der vorhergehenden Ansprüche, dadurch gekennzeichnet, dass der Schmelz- und Verglasungsofen (6) eine schalenförmige Sohle (60A) und eine Wand (60c) aufweist, die eine Affinationssperre bildet, die einer Öffnung (60D) zum Abführen oder Abziehen der Oberflächenschicht der Masse von geschmolzenem Material zugeordnet ist.

9. Anlage nach Anspruch 8, dadurch gekennzeichnet, dass das geschmolzene Material zunächst auf einer innerlich wassergekühlten Trommel (62A) und dann in einem Abschreckbad (62) gekühlt wird.

10. Anlage nach einem der vorhergehenden Ansprüche, dadurch gekennzeichnet, dass der Schmelz- und Verglasungsofen (6) mit einem Abschreckbad versehen ist, in dem die von dem Ofen (6) erzeugten Verbrennungsgase gekühlt werden.

## Claims

1. An installation for recycling municipal waste and the like as energy, the installation including:
shredder apparatus (1) for shredding the waste, the rejects from which are sorted into a first stream of inert matter that is little polluted with organic matter, and into a second stream of inert matter that is more heavily polluted with organic matter or with combustible heavy elements, the second stream being removed via a first outlet (S1);
a circulating fluidized bed reactor (2) receiving the shredded waste;
a cyclone (11) for separating out the solids, and receiving the gases output by the reactor (2);
a recuperator boiler (15) into which the gases output by the cyclone (11) are discharged, and which is provided with a first set of heat exchangers (18), the boiler including a dust-filter hopper from which the solid particles are removed via a second outlet (S2);
a second set of heat exchangers (23) disposed in a chamber (22) into which the gases are fed; and
final treatment apparatus for treating the gases and from which the solid matter resulting from the treatment is removed via a third outlet (S3', S3");
said installation being characterized in that it is provided with an independent melting and vitrification furnace (6) that is connected to each of said outlets by a respective controlled pipe.

2. An installation according to claim 1, characterized in that dust-filter apparatus (16) is disposed between the recuperator boiler (15) and the second set of heat exchangers (23), the solid particles from the dust-filter apparatus being removed via an outlet (S2') connected to the melting and vitrification furnace by a controlled pipe.

3. An installation according to claim 1 or 2, characterized in that the final treatment apparatus includes a filter (17) from which the solid particles are removed via an outlet (S3') connected to the melting and vitrification furnace (6) by a controlled pipe.

4. An installation according to claim 1, 2, or 3, characterized in that the final treatment apparatus includes a flue-gas scrubber (19, 21) from which a scrubber cake is removed via an outlet (S3") connected to the melting and vitrification furnace (6) by a controlled pipe.

5. An installation according to any preceding claim, characterized in that a sifting shredder (5) is installed between the first outlet (S1) and the melting and vitrification furnace (6).

6. An installation according to any preceding claim, characterized in that the reactor (2) is equipped with an internal dense bed (2A) provided with a chamber for tapping off the pyrolysis gas which is injected into the melting and vitrification furnace (6).

7. An installation according to claim 3 or 4, characterized in that the melting and vitrification furnace (6) is provided with a quenching bath, and the scrubber module is equipped with liquid effluent treatment apparatus (21) from which the rejects are injected into the quenching bath of the melting and vitrification furnace (6).

8. An installation according to any preceding claim, characterized in that the melting and vitrification furnace (6) is provided with a bowl-shaped hearth (60A) and a wall (60C) forming a refining barrier associated with an orifice (60D) via which the surface layer of the mass of molten matter is removed or skimmed off.

9. An installation according to claim 8, characterized in that the molten matter is cooled firstly on drum (62A) cooled internally by water, and then in a quenching bath (62).

10. An installation according to any preceding claim, characterized in that the melting and vitrification furnace (6) is provided with a quenching bath in which the combustion gases produced by the furnace (6) are cooled.
